# EUROPÄISCHE PATENTSCHRIFT

(11) **EP 1 090 858 B1**
(45) Veröffentlichungstag und Bekanntmachung des Hinweises auf die Patenterteilung: **05.03.2003**
(21) Anmeldenummer: 00108724.6
(22) Anmeldetag: 22.04.2000
(51) Int. Cl.: B65G 25/08, B65G 19/26, B21D 43/00, B65G 25/10, B21D 43/02

(54) **Fördervorrichtung mit einem endlosen Trum gekoppelt mit einem Linearantrieb**
Conveying device having an endless belt connectable to a linear driving device
Dispositif de transport avec une courroie sans fin connectable à un actionneur linéaire

(30) Priorität: 10.05.1999 DE 19921519
(43) Veröffentlichungstag der Anmeldung: 11.04.2001
(73) Patentinhaber: Wilfried Strothmann GmbH & Co KG Maschinenbau und Handhabungstechnik, 33758 Schloss Holte-Stukenbrock (DE)
(72) Erfinder: Strothmann, Wilfried, 33758 Schloss Holte-Stukenbrock (DE)
(74) Vertreter: TER MEER STEINMEISTER & PARTNER GbR

(56) Entgegenhaltungen:
- EP-A- 1 053 824
- DE-A- 19 619 595
- US-A- 4 569 435
- US-A- 5 320 213

## Beschreibung

Die Erfindung betrifft eine Fördervorrichtung zum positionsgenauen Verschieben von Gegenständen auf einer Förderfläche der Fördervorrichtung, mit einer Anzahl von Vorschubgliedern zum Erfassen der Gegenstände an der in bezug auf die Vorschubrichtung hinteren unteren Kante.

Die Erfindung bezieht sich insbesondere auf eine Vorrichtung zum positionsgenauen Ausrichten von geförderten Gegenständen in bezug auf die Förderfläche, also unabhängig von einer eigentlichen Förderbewegung. Dabei ist etwa an Fälle zu denken, in denen der eigentliche Förderer abgeschaltet ist und die Gegenstände in bestimmte vorgegebene Positionen gebracht werden sollen, oder in denen die Gegenstände gegen einen aus der Förderfläche herausragenden Anschlag geschoben werden sollen.

Bekannt sind verschiedene Fördersysteme, siehe z.B. EP-A-1 053 824, die eine Reihe von in Abstand liegenden Förderriemen oder Rollenbahnen oder dergleichen umfassen, zwischen denen gesonderte Anschläge, Vorschubglieder und dergleichen angehoben und abgesenkt werden können. Grundsätzlich soll die vorliegende Erfindung auch auf einem derartigen System aufbauen.

Aufgabe der Erfindung soll es insbesondere sein, eine Fördervorrichtung der eingangs genannten Art zu schaffen, die es mit konstruktiv geringem Aufwand ermöglicht, die Vorschubglieder mit den im wesentlichen ohnehin vorhandenen Antriebsmittel des Förderers in die Ausgangsposition zu bringen und sodann die eigentliche Vorrückbewegung durchzuführen.

Diese Aufgabe wird erfindungsgemäß bei einer Fördervorrichtung der obigen Art dadurch gelöst, daß zum Verschieben der Vorschubglieder endlose oder über die Vorschubglieder zu einem endlosen Trum verbundene Zugglieder vorgesehen sind, daß die Zugglieder zur Verschiebung der Vorschubglieder in eine vorgegebene Ausgangsposition durch eine gemeinsame, gesondert mit den Zuggliedern zu koppelnde Welle antreibbar sind und daß die Zugglieder in der vorgegebenen Ausgangsposition der Vorschubglieder von der gemeinsamen Welle abkoppelbar und mit jeweils einem gesonderten Linearantrieb mit dem Hub der gewünschten Verschiebungslänge der Gegenstände koppelbar sind.

Dabei kann die erwähnte gemeinsame Welle diejenige Welle sein, die den eigentlichen Förderer antreibt, also etwa parallele Förderriemen, Röllchenbahnen oder dergleichen in Bewegung setzt. Diese Welle, die wiederum über einen einzigen gemeinsamen Motor gedreht werden kann, kann mit Hilfe von Kupplungen mit den Zuggliedern der Vorschubglieder gekoppelt werden und diese so bewegen, daß die Vorschubglieder in die gewünschte, vorgegebene Ausgangsposition gelangen. Hier werden die Zugglieder von der Welle abgekoppelt und zugleich mit einem gestellfesten, einfachen Linearantrieb, etwa einem Luftzylinder gekoppelt, der dann die gewünschte Vorrückbewegung ausführt.

Da somit zum Einstellen der Vorschubglieder in die Ausgangsposition lediglich jeweils eine zusätzliche Riemenscheibe mit Kupplung auf der gemeinsamen Antriebswelle des eigentlichen Förderers erforderlich ist und die eigentliche Vorrückbewegung mit einfachen, gestellfesten und daher nicht als träge Masse mitzuschleppenden Luftzylindern ausgeführt werden kann, ist der konstruktive Mehraufwand gegenüber einem einfachen Förderer gering. Andererseits ist es nach der vorliegenden Erfindung nicht notwendig, für den Antrieb der Vorschubglieder Energieleitungen mitzuführen.

Sofern mehrere nebeneinander liegende Vorschubglieder in entsprechende Ausgangspositionen gebracht werden müssen, der zu fördernde Gegenstand also mit seiner hinteren unteren Kante rechtwinklig zur Förderrichtung verläuft, können alle Vorschubglieder gleichzeitig eingestellt werden. Verläuft die hintere Kante schräg zur Förderrichtung, so werden die einzelnen Zugglieder nacheinander an die gemeinsame Welle angekoppelt und die Vorschubglieder nacheinander eingestellt. Die Linearantriebe, insbesondere Luftzylinder, können stets in ihrer gestellfesten Position verbleiben, da sie die Zugglieder in beliebiger Position erfassen können.

Anstelle von Luftzylindern können auch andere Fluidzylinder, ggfs. auch Hydraulikzylinder oder auch Spindelantriebe verwendet werden.

Diese Linearantriebe, beispielsweise verkörpert durch Luftzylinder, sind vorzugsweise jeweils mit einem Ende, also dem Zylinder oder der Kolbenstange, gestellfest gelagert und mit dem anderen mit einer verschiebbar am Gestell geführten Kupplung verbunden, die es gestattet, das entsprechende Ende des Linearantriebs fest mit dem Zugglied zu verbinden, so daß das Zugglied durch den Linearantrieb hin- und hergehend verschoben werden kann.

Das Zugglied ist zweckmäßigerweise ein endloses Zugglied, vor allem ein Riemen und besonders vorteilhaft ein Zahnriemen. Die Kupplung zum Verbinden des Linearantriebs und des Zuggliedes ist vorzugsweise federnd in die Eingriffsstellung vorgespannt und wird durch Luftdruck oder hydraulisch ausgekuppelt.

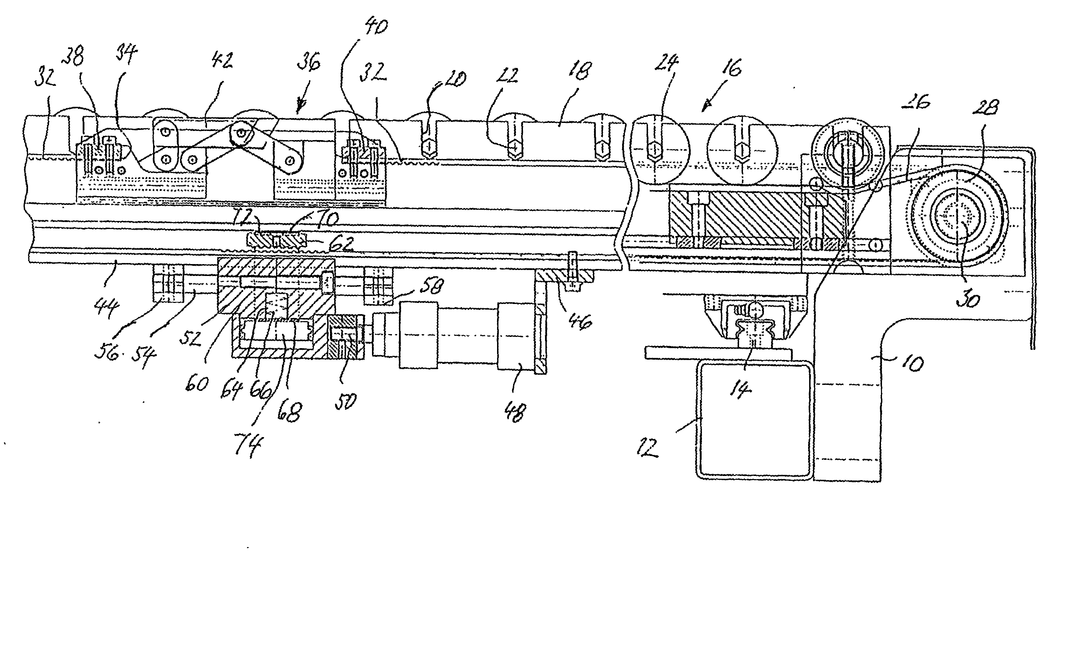

Im folgenden werden bevorzugte Ausführungsbeispiele der Erfindung anhand der beigefügten Zeichnung näher erläutert.

Die einzige Figur ist eine schematische Seitenteilansicht einer erfindungsgemäßen Fördervorrichtung.

In der Zeichnung ist mit 10 eine Stütze eines Gestells des Förderers bezeichnet. 12 bezeichnet eine senkrecht zur Zeichenebene verlaufende Traverse des Gestells in der Form eines Vierkantprofils. Auf der oberen Oberfläche befindet sich eine Schiene 14, auf die jeweils einzelne Einheiten, bestehend aus einer Röllchenbahn 16 sowie den Elementen der später darzustellenden Vorrückeinrichtung senkrecht zur Zeichenebene aufgeschoben werden können, wenn beispielsweise eine Fördervorrichtung mit gewisser Breite mit mehreren nebeneinander liegenden Röllchenreihen geschaffen werden soll.

Die vorliegende Beschreibung soll sich im wesentlichen auf die eigentlich erfindungsgemßen Elemente konzentrieren. Die mit 16 bezeichnete Röllchenbahn besteht aus einer in Förderrichtung verlaufenden Schiene 18, in die senkrecht von oben eintretende Schlitze 20 eingearbeitet sind, die die Achsen 22 einzelner Röllchen 24 aufnehmen. Die Achsen gleiten in den Schlitzen herab, stützen sich jedoch nicht an deren Boden ab. Vielmehr werden die Röllchen 24 durch einen endlosen Zahnriemen 26 abgestützt, der unter den Röllchen hindurch und sodann um eine Zahnriemenscheibe 28 herumläuft, die drehfest auf einer Welle 30 angebracht ist.

Diese Anordnung kann sich senkrecht zu der Zeichenebene in mehrfachen Reihen wiederholen. Dabei können alle Zahnriemenscheiben 28 durch einen nicht gezeigten, gemeinsamen Motor über die Welle 30 angetrieben werden. Die Zahnriemenscheiben 28 sind drehfest mit der Welle 30 verbunden.

Die Zahnriemenscheiben können auch drehfest, dabei aber länksverschiebbar auf der Welle 30 angeordnet sein, so daß die gesamte Anordnung quer zur Förderrichtung verschiebbar ist und entsprechend den Erfordernissen des einzelnen Verschiebevorgangs und der Form der zu verschiebenden Gegenstände eingestellt werden kann.

Röllchenförderer dieser Art sind an sich bekannt, so daß hier eine weiterführende Erläuterung nicht notwendig ist.

Vor oder hinter der Zahnriemenscheibe 28, bezogen auf die Darstellung in der Zeichnung, befindet sich eine weitere, nicht bezeichnete Zahnriemenscheibe gleichen Durchmessers, die ebenfalls auf der Welle 30 sitzt, jedoch nicht dauerhaft verbunden, sondern lediglich über eine nicht dargestellte Kupplung mit der Welle 30 zu verbinden ist. Diese Zahnriemenscheibe treibt einen Zahnriemen 32 an, der ebenfalls ein Endlosriemen ist, jedoch im linken Bereich der Zeichnung eine Lücke 34 aufweist. Die Lücke 34 wird durch einen Schubklinkenmechanismus 36, an dem die beiden offenen Enden des mit der Lücke 34 versehenen Zahnriemens 32 mit Hilfe von Klemmstücken 38,40 in der in der Zeichnung gezeigten Weise befestigt sind. Der Schubklinkenmechanismus wirkt derart, daß eine Vorschubklinke, die das erfindungsgemäße Vorschubolied bildet und mit 42 bezeichnet ist, bei der Bewegung des Zahnriemens 32 nach rechts über die Förderfläche angehoben und bei der Bewegung nach links in die dargestellte Position abgesenkt wird.

Während sich die Lücke 34 des Zahnriemens 32 und der diese überbrückende Schubklinkenmechanismus 36 im oberen Trum des endlosen Zahnriemens 32 befinden, soll nunmehr auf dessen unteren Trum eingegangen werden. Auf der unteren Seite eines mit 44 bezeichneten Längsrahmenteils des Gestells des Förderers ist ein Winkel 46 in nach unten ragender Position befestigt, und an diesem ist, nach links in der Zeichnung gerichtet, ein waagerecht liegender Luftzylinder 48 mit seiner Zylinderseite befestigt. Die nach links aus dem Luftzylinder austretende Kolbenstange 50 ist über nicht näher dargestellte Befestigungsteile an einer Kupplung 52 befestigt. Diese Kupplung 52 ist in stangenförmigen Längsführungen 54 an der Unterseite des Längsrahmenteils 44 verschiebbar Die Längsführungen 54 sind an ihren Enden mit Hilfe von Befestigungsblöcken 56,58 am Längsrahmenteil 44 angebracht.

Die Kupplung 52 besteht im einzelnen aus einer unterhalb des unteren Trums des Zahnriemens 32 liegenden Basis 60 und einer oberhalb des Zahnriemens liegenden Klemmbacke 62. In der Basis 60 befindet sich ein nach unten offener zylindrischer Hohlraum 64, in dem sich eine Druckfeder 66 befindet. Diese Druckfeder drückt die mit 68 bezeichnete Bodenfläche eines als Rechteckprofilabschnitt ausgebildeten Druckrahmens 70, dessen beide von der Bodenfläche 68 nach oben verlaufenden Seitenflächen durch gestrichelte Linien in der Zeichnung angedeutet sind. Diese beide Seitenflächen verlaufen, vereinfacht ausgedrückt, vor und hinter dem mit 52 bezeichneten Basisteil und laufen oben zu einem waagerechten Oberteil 72 zusammen. Dieses Oberteil 72 übergreift die Klemmbacke 62. Die Druckfeder 66 ist daher bestrebt, diese Klemmbacke nach unten gegen den Zahnriemen 32 zu drücken. Andererseits befindet sich unterhalb der Druckfeder 66 ein Luftzylinder 74, der der Druckfeder 66 entgegenwirkt und daher bei der Zufuhr von Druckluft die Klemmbacke löst und den Zahnriemen 62 freigibt.

Nunmehr soll die Funktion der erfindungsgemäßen Fördervorrichtung erläutert werden. In Abhängigkeit von der Form, insbesondere dem Verlauf der hinteren Kante eines vorzurückenden Gegenstandes werden die einzelnen Vorschubklinken 42, die in Richtung senkrecht zur Zeichenebene in mehreren Reihen hintereinander liegen können, in ihre vorgegebenen Ausgangspositionen bewegt. Dies geschieht dadurch, daß die Zahnriemen 32 nacheinander über die nicht dargestellten Kupplungen mit der Welle 30 gekoppelt werden. Die Welle 30 kann nun so weit gedreht werden, daß die einzelnen Vorschubklinken 42 in die gewünschten Ausgangspositionen gelangen, von der aus sie den jeweiligen Gegenstand vorschieben sollen. Sobald die einzelnen Klinken 42 ihre bestimmungsgemäße Position erreicht haben, werden die Zahnriemen 32 wieder von der Welle 30 abgekoppelt.

Die Welle 30, die zusammen mit dem nicht dargestellten Antriebsmotor zunächst als Antriebsmittel für die Röllchen 24, also die eigentliche Förderaufgabe, vorgesehen ist, kann damit zusätzlich zum Einstellen der einzelnen Vorschubklinken genutzt werden.

Unabhängig von der Ausgangsposition der einzelnen Vorschubklinken, die grundsätzlich beliebig ist, können diese nun über den gleichen Hub mit Hilfe der jeweiligen Luftzylinder 48 vorgeschoben werden. Nachdem alle Zahnriemen 32 von der Welle 30 gelöst sind, können die Kupplungen 52 geschlossen werden. Damit entsteht eine Verbindung zwischen den Kolbenstangen 50 der Luftzylinder 48 und dem Zahnriemen 32. Der Zahnriemen 32 wird jetzt von rechts nach links im unteren Trum und damit von links nach rechts im oberen Trum um die in diesem Falle frei mitlaufende Zahnriemenscheibe verschoben. Dabei erhebt sich die Vorschubklinke 42, wie dargelegt, in nicht näher zu erläuternder Weise über die Förderfläche, so daß sie einen zu fördernden Gegenstand erfassen kann.

## Patentansprüche

1. Fördervorrichtung zum positionsgenauen Verschieben von Gegenständen auf einer Förderfläche der Fördervorrichtung, mit einer Anzahl von Vorschubgliedern (42) zum Erfassen der Gegenstände an der in bezug auf die Vorschubrichtung hinteren unteren Kante, **dadurch gekennzeichnet, daß** zum Verschieben der Vorschubglieder endlose oder über die Vorschubglieder zu einem endlosen Trumverbundene Zugglieder (32) vorgesehen sind, daß die Zugglieder zur Verschiebung der Vorschubglieder in eine vorgegebene Ausgangsposition durch eine gemeinsame, gesondert mit den Zuggliedern zu koppelnde Welle (30) antreibbar sind und daß die Zugglieder in der vorgegebenen Ausgangsposition der Vorschubglieder von der gemeinsamen Welle (30) abkoppelbar und mit jeweils einem gesonderten Linearantrieb (48,50) mit dem Hub der gewünschten Verschiebungslänge der Gegenstände koppelbar sind.

2. Fördervorrichtung nach Anspruch 1, **dadurch gekennzeichnet, daß** der gesonderte Linearantrieb einen Fluidzylinder, insbesondere Luftzylinder (48) umfaßt.

3. Fördervorrichtung nach Anspruch 2, **dadurch gekennzeichnet, daß** der Luftzylinder (48) mit einem Ende (Zylinder oder Kolbenstange) gestellfest gelagert und am anderen Ende mit einer in Förderrichtung verschiebbar zum Gestell geführten Kupplung (52) verbunden ist, die in einer ihrer Schaltstellungen das Zugglied (32) erfaßt und in der anderen freigibt.

4. Fördervorrichtung nach Anspruch 3, **dadurch gekennzeichnet, daß** die Kupplung (52) federnd in die Eingriffsstellung vorgespannt ist.

5. Fördervorrichtung nach Anspruch 3 und 4, **dadurch gekennzeichnet, daß** die Kupplung (52) durch Zufuhr eines Druckmediums lösbar ist.

6. Fördervorrichtung nach einem der vorhergehenden Ansprüche, **dadurch gekennzeichnet, daß** auf der gemeinsamen Welle (30) eine Anzahl von Antriebsrädern (28) befestigt ist, die jeweils von einem der Zugglieder umlaufen werden und mit diesen antriebsverbunden sind, und daß den Antriebsrädern gesonderte Kupplungen zur gesonderten Ankupplung an die Welle (30) zugeordnet sind.

7. Fördervorrichtung nach Anspruch 6, **dadurch gekennzeichnet, daß** die Zugglieder Riemen sind.

8. Fördervorrichtung nach Anspruch 7, **dadurch gekennzeichnet, daß** die Zugglieder Zahnriemen (32) sind.

9. Fördervorrichtung nach einem der Ansprüche 3 bis 8, **dadurch gekennzeichnet, daß** die Kupplungen (52) zum Verbinden der Zugglieder (32) mit den Linearantrieben eine von einer Seite her gegen das jeweilige Zugglied anliegende, entlang dem Zugglied am Gestell verschiebbar geführte Basis (60) und eine von der anderen Seite des Zuggliedes an die Basis heranziehbare Klemmbacke (62) umfassen.

10. Fördervorrichtung nach Anspruch 8 und 9, **dadurch gekennzeichnet, daß** die Klemmbacke (62) auf der dem Zahnriemen zugewandten Seite eine entsprechende Verzahnung aufweßt.

## Claims

1. Conveyor device for displacing objects on a conveyor surface of the conveyor device precisely in terms of position, having a number of feed members (42) for grasping the objects at their rear lower edge in relation to the direction of feed, **characterised in that** for displacing the feed members there are provided tension members (32) which are endless or are joined by way of the feed members to form an endless belt portion, **in that** the tension members, for displacement of the feed members, can be driven into a predetermined starting position by a common shaft (30) that is to be coupled separately with the tension members, and **in that** the tension members, in the predetermined starting position of the feed members, can be uncoupled from the common shaft (30) and each coupled with a separate linear drive (48, 50) having the stroke of the desired displacement length of the objects.

2. Conveyor device according to claim 1, **characterised in that** the separate linear drive comprises a fluid cylinder, especially an air cylinder (48).

3. Conveyor device according to claim 2, **characterised in that** the air cylinder (48) is fixedly mounted on the frame at one end (cylinder or piston rod) and is connected at the other end to a coupling (52) which is guided displaceably relative to the frame in the conveyor direction, which coupling (52) grasps the tension member (32) in one of its positions and frees it in the other position.

4. Conveyor device according to claim 3, **characterised in that** the coupling (52) is resiliently biased into the engagement position.

5. Conveyor device according to claim 3 and 4, **characterised in that** the coupling (52) is detachable by supply of a pressure medium.

6. Conveyor device according to any one of the preceding claims, **characterised in that** a number of drive wheels (28) are fastened on the common shaft (30), around each drive wheel there passes one of the tension members, to which they are connected in a driving manner, and separate couplings are associated with the drive wheels for separate coupling to the shaft (30).

7. Conveyor device according to claim 6, **characterised in that** the tension members are belts.

8. Conveyor device according to claim 7, **characterised in that** the tension members are toothed belts (32).

9. Conveyor device according to any one of claims 3 to 8, **characterised in that** the couplings (52) for connecting the tension members (32) with the linear drives comprise a base (60), which rests with one side against the respective tension member and is displaceably guided along the tension member on the frame, and a clamping jaw (62) which can be brought up to the base from the other side of the tension member.

10. Conveyor device according to claim 8 and 9, **characterised in that** the clamping jaw (62) has corresponding toothing on the side facing the toothed belt.

## Revendications

1. Dispositif de transport pour déplacer des objets de manière exactement positionnée sur une surface de transport du dispositif de transport, comportant un certain nombre d'organes d'avance (42) destinés à saisir les objets sur le bord inférieur arrière par rapport au sens d'avance, **caractérisé en ce que** pour le déplacement des organes d'avance sont prévus des organes de traction (32) sans fin ou reliés, par les organes d'avance, à une courroie sans fin, **en ce que** les organes de traction sont aptes à être entraînés, pour le déplacement des organes d'avance dans une position de départ prédéfinie, par un arbre (30) commun à accoupler séparément avec les organes de traction, et **en ce que** les organes de traction sont aptes à être désaccouplés de l'arbre (30) commun, dans la position de départ prédéterminée des organes d'avance, et sont aptes à être accouplés chacun avec un dispositif d'entraînement linéaire (48, 50) séparé dont la course correspond à la longueur de déplacement voulue des objets.

2. Dispositif de transport selon la revendication 1, **caractérisé en ce que** le dispositif d'entraînement linéaire séparé comprend un cylindre à fluide, en particulier un cylindre à air (48).

3. Dispositif de transport selon la revendication 2, **caractérisé en ce que** le cylindre à air (48) est monté solidairement avec le bâti par une extrémité (cylindre ou tige de piston), et est relié, à l'autre extrémité, à un accouplement (52) guidé de manière à pouvoir coulisser par rapport au bâti dans le sens de transport, lequel accouplement saisit l'organe de traction (32) dans l'une de ses positions de commutation et le libère dans l'autre.

4. Dispositif de transport selon la revendication 3, **caractérisé en ce que** l'accouplement (52) est précontraint de manière élastique dans la position d'engagement.

5. Dispositif de transport selon les revendications 3 et 4, **caractérisé en ce que** l'accouplement (52) est apte à être supprimé par arrivée d'un fluide sous pression.

6. Dispositif de transport selon l'une des revendications précédentes, **caractérisé en ce que** sur l'arbre (30) commun est fixé un certain nombre de roues d'entraînement (28) qui sont entourées chacune par l'un des organes de traction et sont reliées en entraînement avec ceux-ci, et **en ce qu'**aux roues d'entraînement sont associés des accouplements séparés pour l'accouplement séparé à l'arbre (30).

7. Dispositif de transport selon la revendication 6, **caractérisé en ce que** les organes de traction sont des courroies.

8. Dispositif de transport selon la revendication 7, **caractérisé en ce que** les organes de traction sont des courroies crantées (32).

9. Dispositif de transport selon l'une des revendications 3 à 8, **caractérisé en ce que** les accouplements (52) pour la liaison des organes de traction (32) avec les dispositifs d'entraînement linéaire, comprennent une base (60) s'appliquant depuis un côté contre l'organe de traction correspondant, guidée coulissante le long de l'organe de traction, sur le bâti, et comprennent une mâchoire de serrage (62) pouvant être serrée contre la base, depuis l'autre côté de l'organe de traction.

10. Dispositif de transport selon les revendications 8 et 9, **caractérisé en ce que** la mâchoire de serrage (62) comporte, sur le côté tourné vers la courroie crantée, une denture correspondante.
